# EUROPEAN PATENT SPECIFICATION

(11) **EP 2 327 473 B1**
(45) Date of publication and mention of the grant of the patent: **31.07.2013**
(21) Application number: 09804829.1
(22) Date of filing: 26.06.2009
(51) Int. Cl.: B01J 2/16, B01J 8/24, F26B 17/10

(54) **FLUIDIZED BED DEVICE**
WIRBELBETTVORRICHTUNG
DISPOSITIF À LIT FLUIDISÉ

(30) Priority: 05.08.2008 JP 2008202233
(43) Date of publication of application: 01.06.2011
(73) Proprietor: Freund Corporation, Tokyo 169-0072 (JP); Okawara Mfg. Co., Ltd., Shizuoka 421-0304 (JP)
(72) Inventor: FUSEJIMA Iwao, Tokyo 163-6034 (JP); NARA Kazuhiko, Tokyo 163-6034 (JP); OMORI Masayuki, Yaizu-shi Shizuoka 421-0212 (JP)
(74) Representative: HOFFMANN EITLE
(86) International application number: PCT/JP2009/061697
(87) International publication number: WO 2010/016342

(56) References cited:
- WO-A1-94/23831
- WO-A1-2007/145051
- JP-A- 5 220 377
- JP-T- 8 508 931
- US-A- 4 426 936

## Description

### Technical Field

The present invention relates to a fluidized bed apparatus used for granulation, coating, and the like of powder and particle, and more particularly, to an attachment structure of a particulate-material-holding perforated plate installed in the apparatus.

### Background Art

In fields of medicine, cosmetics, food, and the like, there have been widely used fluidized bed apparatuses for performing processes such as granulation, coating, mixing, stirring, and drying through fluidization of particulate materials such as powder or grains with use of air flows. In such fluidized bed apparatuses, objects of processing such as powder are injected into a cylindrical processing vessel. Then, a binder liquid, a coating liquid, and the like are sprayed with a spray nozzle to the fluidized particulate materials. In this manner, processes such as granulation and coating are performed. In a lower portion of the processing vessel, there is provided an air-permeable perforated plate formed of a wire net or the like. A processing air is supplied from below the perforated plate. The objects of processing such as powder are fluidized by the processing air while being supported by the perforated plate. The binder liquid and the like are sprayed to the fluidized objects of processing. In this manner, the processes such as granulation are performed.

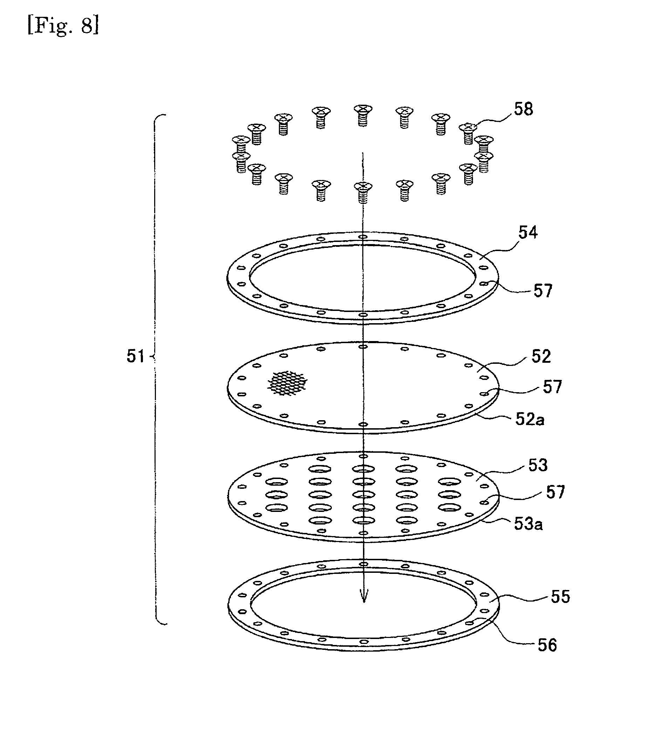

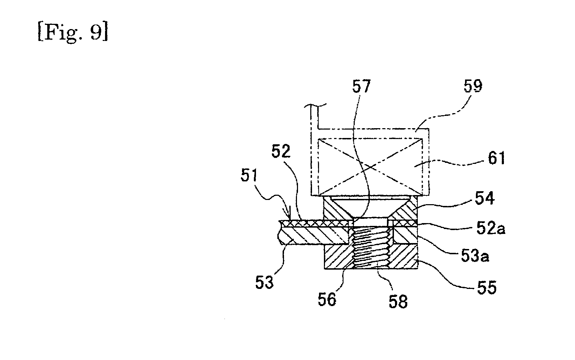

FIG. 8 is an explanatory diagram of an attachment structure of the perforated plate in such a fluidized bed apparatus. FIG. 9 is an explanatory diagram of a cross-sectional configuration of a perforated-plate attachment portion. As illustrated in FIG. 8, a perforated plate 51 has a structure in which a disk-like upper perforated disk 52 and a disk-like lower perforated disk 53 are sandwiched between an annular upper flange 54 and an annular lower flange 55. A fine-meshed wire net is used as the upper perforated disk 52, and a porous metal plate such as a punching board is used as the lower perforated disk 53. The upper flange 54 and the lower flange 55 are formed of stainless into ring-like shapes. The lower flange 55 is provided with a plurality of female screw holes 56 formed along a circumferential direction. Each of the upper flange 54, the upper perforated disk 52, and the lower perforated disk 53 are provided with a plurality of screw-passing holes 57 formed correspondingly to the female screw holes 56.

For formation of the perforated plate 51, as illustrated in FIG. 8, first, the lower flange 55, the lower perforated disk 53, the upper perforated disk 52, and the upper flange 54 are stacked in this order. After that, through the screw-passing holes 57, countersunk screws 58 are screwed into the female screw holes 56 so that the upper perforated disk 52 and the lower perforated disk 53 are fixed between the upper flange 54 and the lower flange 55 in a manner of being sandwiched. In this manner, the perforated plate 51 is assembled. As illustrated in FIG. 9, the perforated plate 51 is attached to a lower portion of a processing vessel 59 through intermediation of an air-tightening sealing member 61, and then is incorporated into the fluidized bed apparatus.
Patent Document 1: Japanese Patent Application Laid-open No. Hei 05-220377
Patent Document 2: Japanese Utility Model Application Laid-open No. Hei 05-70639 U
WO-A1-04/23831 discloses an apparatus according to the preamble of claim 1.

### Disclosure of the Invention

### Problems to be solved by the Invention

However, in the perforated plate as just described above, the upper perforated disk 52 and the lower perforated disk 53 are fixed with a large number (eighteen in FIG. 8) of screws 58, and hence there has been a problem in that attachment work of the perforated plate 51 is markedly troublesome. In particular, in the perforated plate 51, weight of each component is large (approximately 20 kg in total). Thus, it is difficult to conduct work such as stacking of the components and fixation with screws, which leads to not only a problem with work man-hours but also a problem with work environment.

Further, as illustrated in FIG. 9, respective outer peripheral portions 52a and 53a of the upper perforated disk 52 and the lower perforated disk 53 of the perforated plate 51 are mounted to a fluidized bed apparatus in a state of being exposed to an outside of the apparatus. Thus, when the fluidized bed apparatus is driven under a state in which a pressure in the processing vessel 59 is set to be lower than that of the outside (the atmospheric pressure), irrespective of pressing with the upper flange 54 and the lower flange 55, there is a risk that external air is sucked from minute gaps between the components. When the external air leaks into the processing vessel 59, processing conditions (temperature, humidity, flowing-in amount, and the like of the processing air) of particulate materials become unstable. Under the unstable processing conditions, there is a problem of variation in processing qualities of granulation, coating, and the like.

It is therefore an object of the present invention to improve assembly properties of the perforated plate mounted to the fluidized bed apparatus and to stabilize the product quality by preventing suction of the external air from an outer periphery of the perforated plate.

### Means for solving the Problems

A fluidized bed apparatus according to the present invention includes: a processing vessel formed in a cylindrical shape; and an air-permeable perforated plate attached to the processing vessel, for communicating an inside and an outside of the processing vessel to each other, in which the perforated plate includes: a first perforated disk including an annular flange member, and a net-like member arranged so as to face a central void portion of the flange member; a disk-like air-permeable second perforated disk having vents; and a support flange including an annular ring portion and a side-wall portion provided upward over an outer periphery of the ring portion, and a perforated disk housing portion which is capable of housing the first perforated disk and the second perforated disk is formed on the inner side of the side-wall portion, and in which the processing vessel is connected to the perforated plate through intermediation of a sealing member held in close contact with an upper end of the side-wall portion.

In the present invention, the perforated plate can be assembled by attachment of the first perforated disk and the second perforated disk into the perforated disk housing portion of the support flange. Thus, the perforated plate can be assembled and disassembled without use of screws. Further, the outer peripheries of the first perforated disk and the second perforated disk can be covered with the side-wall portion, and hence the first perforated disk and the second perforated disk are not exposed to the outside of the apparatus. As a result, external air also can be prevented from being sucked from the side surfaces of the perforated disks.

In the fluidized bed apparatus, the first perforated disk and the second perforated disk are fit-inserted into the perforated disk housing portion, and the side-wall portion may be provided so as to face an entire of an outer peripheral portion of each of the first perforated disk and the second perforated disk while covering the outer peripheral portion of each of the first perforated disk and the second perforated disk. Further, the sealing member may be provided so as to be held in close contact with an upper surface of the first perforated disk of the perforated plate housed in the perforated disk housing portion.

Meanwhile, in the fluidized bed apparatus, the support flange includes a perforated-plate ejection mechanism for lifting up the first perforated disk and the second perforated disk which are arranged in the perforated disk housing portion. The perforated-plate ejection mechanism may include: a shaft member attached to the side-wall portion and capable of being rotationally manipulated from an outside of the apparatus; and a cam member attached to the shaft member and held in contact with the first perforated disk or the second perforated disk, the cam member being rotationally moved in accordance with rotation of the shaft member so that the first perforated disk and the second perforated disk are lifted up. Provision of the perforated-plate ejection mechanism as just described above enables the first perforated disk and the second perforated disk to be easily ejected from the support flange, and hence facilitates disassembly work of the perforated plate.

### Effects of the Invention

According to the fluidized bed apparatus of the present invention, the perforated plate to be attached to the processing vessel includes: the first perforated disk including the flange member and the net-like member, the disk-like second perforated disk including vents; and the support flange including the ring portion and the side-wall portion, and the perforated disk housing portion is formed therein. Further, the processing vessel is connected to the perforated plate through intermediation of the sealing member held in close contact with the upper end of the side-wall portion. Thus, the perforated plate can be assembled and disassembled without use of screws. Further, the outer peripheries of the first perforated disk and the second perforated disk can be covered with the side-wall portion, and hence the first perforated disk and the second perforated disk are not exposed to the outside of the apparatus. As a result, external air also can be prevented from being sucked from the side surfaces of the perforated disks.

In addition, provision of the perforated-plate ejection mechanism to the support flange enables the first perforated disk and the second perforated disk to be easily ejected from the support flange, and hence enables disassembly work of the perforated plate and reduction of work man-hours.

### Brief Description of the Drawings

[FIG. 1] A front view of an external appearance of a fluidized bed apparatus according to an embodiment of the present invention.
[FIG. 2] A side view of the fluidized bed apparatus of FIG. 1.
[FIG. 3] An explanatory diagram of an attachment structure of a perforated plate in the fluidized bed apparatus of FIG. 1.
[FIG. 4] An explanatory diagram of a cross-sectional configuration of a perforated-plate attachment portion.
[FIG. 5] A cross-sectional view of a structure of a perforated-plate ejection mechanism.
[FIG. 6] A plan view of the perforated-plate ejection mechanism.
[FIG. 7] An explanatory diagram illustrating operation of the perforated-plate ejection mechanism, in which the perforated-plate ejection mechanism is viewed from the X direction of FIG. 5.
[FIG. 8] An explanatory diagram of an attachment structure of a perforated plate in a conventional fluidized bed apparatus.
[FIG. 9] An explanatory diagram of a cross-sectional configuration of a perforated-plate attachment portion in the fluidized bed apparatus of FIG. 8.

### Description of Symbols

| | | | |
|---|---|---|---|
| 1 | fluidized bed apparatus | 2 | processing vessel |
| 3 | support | 4 | cover unit |
| 5 | filter casing | 6 | spray casing |
| 7 | raw-material-vessel container | 8 | air supply unit |
| 11 | cover bracket | 12 | air exhaust port |
| 14 | top plate | 15 | cartridge filter |
| 16 | filter member | 17 | retainer |
| 18 | end cap | 19 | filter-fixing knob |
| 21 | spray nozzle | 22 | swing bracket |
| 23 | fluidizing chamber | 24 | carriage |
| 25 | raw-material storage chamber | 26 | perforated plate |
| 27 | air supply chamber | 28 | air supply duct |
| 31 | flanged upper perforated disk (first perforated disk) | | |
| 32 | lower perforated disk (second perforated disk) | | |
| 32a | vent | 33 | support flange |
| 33a | inner peripheral portion | | |
| 33b | outer peripheral portion | | |
| 34 | flange member | 34a | central void portion |
| 34b | upper surface | | |
| 35 | wire net (net-like member) | | |
| 36 | ring portion | | |
| 37 | sealing side wall (side-wall portion) | | |
| 37a | upper end portion | 37b | inner wall |
| 38 | handle | | |
| 39 | perforated disk housing portion | | |
| 41 | sealing material (sealing member) | | |
| 51 | perforated plate | 52 | upper perforated disk |
| 52a | outer peripheral portion | 53 | lower perforated disk |
| 53a | outer peripheral portion | 54 | upper flange |
| 55 | lower flange | 56 | tap hole |
| 57 | screw-passing hole | 58 | perforated disk screw |
| 59 | processing vessel | 61 | sealing material |
| 71 | perforated-plate ejection mechanism | | |
| 72 | manipulation rod (shaft member) | 73 | lever cam (cam member) |
| 74 | rod-insertion hole | 75 | large diameter portion |
| 76 | small diameter portion | 77 | washer |
| 78 | O-ring | 79 | collar |
| 81 | handle | 81a | boss portion |
| 81b | handgrip portion | 82 | detachable knob |
| 83 | shaft hole | 84 | pin hole |
| 85 | detent pin | 86 | flat surface portion |
| 87 | male-screw portion | 88 | female-screw portion |

### Best Mode for carrying out the Invention

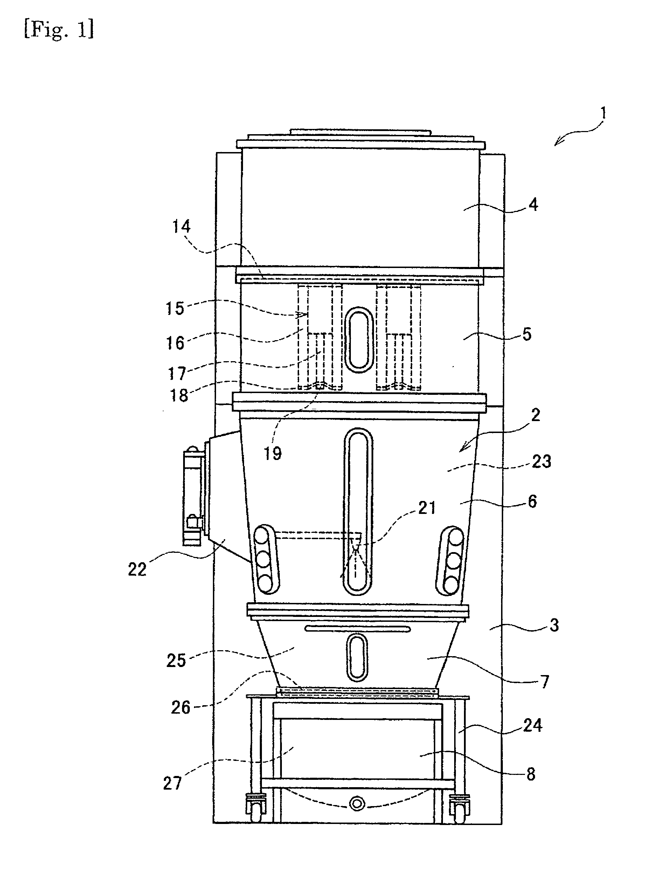

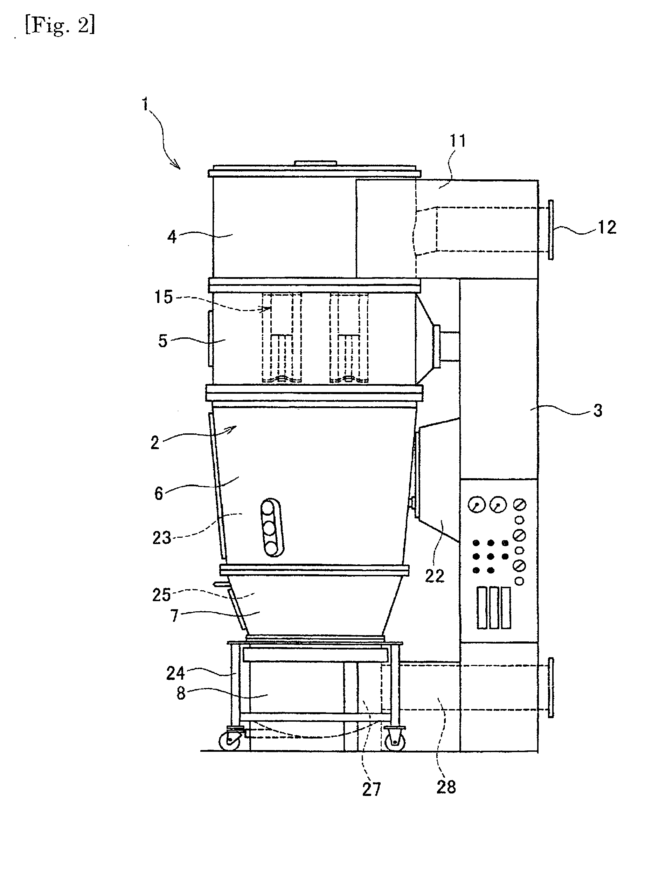

In the following, detailed description is made of an embodiment of the present invention with reference to the figures. FIG. 1 is a front view of an external appearance of a fluidized bed apparatus according to the embodiment of the present invention, and FIG. 2 is a side view of the fluidized bed apparatus of FIG. 1. A fluidized bed apparatus 1 is used for manufacture of granular medicine, food, and the like. In the apparatus, a binder liquid and a coating liquid are sprayed to particulate materials fluidized by a processing air.

The fluidized bed apparatus 1 is provided with a cylindrical processing vessel 2 in which particulate materials as raw materials are stored and undergo a desired granulation-coating process and the like. The processing vessel 2 is made of stainless steel, and as illustrated in FIGS. 1 and 2, is supported by a support base 3. In the processing vessel 2 of the fluidized bed apparatus 1, a cover unit 4, a filter casing 5, a spray casing 6, a raw-material-vessel container 7, and an air supply unit 8 are arranged in the stated order from above in a superimposed manner. At the time of particulate material processing, the units, for example, the cover unit 4 and the filter casing 5 are fastened to each other in an airtight manner by ring-like sealing members.

The cover unit 4 is fixedly supported with respect to the support base 3 by a cover bracket 11. An upper surface of the cover unit 4 is provided with an air exhaust port 12. An air exhaust duct (not shown) is connected to the air exhaust port 12. The filter casing 5 formed separately from the spray casing 6 is attached onto a lower surface side of the cover unit 4. The filter casing 5 is provided so as to be movable in an upper-and-lower direction by a lifting mechanism 13 incorporated in the support base 3. A disk-like top plate 14 is fixed to an upper end portion of the filter casing 5. Cartridge filters 15 are attached to the top plate 14. In the fluidized bed apparatus 1, the top plate 14 is fixed by welding to an inner periphery of the filter casing 5 without any space therebetween so that powder does not escape from between the casing and the top plate.

A filter member 16 made of polyester nonwoven fabric is used for the cartridge filters 15 of the fluidized bed apparatus 1. A stainless retainer 17 is inserted at a center of the filter member 16. The retainer 17 has an upper end fixed to the top plate 14 and a lower end to which an end cap 18 and a filter-fixing knob 19 are attached. Through fastening the filter-fixing knob 19, the filter member 16 is fixed to the top plate 14 while being guided by the retainer 17.

In the spray casing 6, there are provided a spray nozzle 21 for spraying a binder liquid and a coating liquid to particulate materials. The spray casing 6 is attached to the support base 3 through intermediation of a swing bracket 22, and is provided so as to be swingingly movable in a horizontal direction. In the fluidized bed apparatus 1, the spray casing 6 is separated from the filter casing 5. Thus, withdrawal of the spray casing 6 in the horizontal direction enables a worker to access the cartridge filters 15 in the filter casing from below. Further, a fluidizing chamber 23 is formed in the spray casing 6, and the spray nozzle 21 is arranged in the fluidizing chamber 23. Through tubes (not shown), a binder liquid and a coating liquid are supplied from a pump provided outside the apparatus to the spray nozzle 21.

The raw-material-vessel container 7 is arranged below the spray casing 6. Particulate materials as objects of processing are put into the raw-material-vessel container 7. The raw-material-vessel container 7 is an inverse truncated conical cylinder reduced in diameter downward. To the raw-material-vessel container 7, a carriage 24 is attached so that the container is freely movable on a floor surface. A raw-material storage chamber 25 is formed in the raw-material-vessel container 7. An air-permeable perforated plate 26 is provided in a lower portion of the raw-material-vessel container 7, that is, a bottom portion of the raw-material storage chamber 25. Particulate materials put into the raw-material storage chamber 25 are supported on the perforated plate 26.

The air supply unit 8 having an air supply chamber 27 therein is installed below the raw-material-vessel container 7. The air supply unit 8 is connected to an air supply duct 28 communicating to the air supply chamber 27. The air supply duct 28 is connected to an air supply source (not shown) provided outside the apparatus. Into the air supply chamber 27, a processing air (fluidizing air) for fluidizing particulate materials is supplied through the air supply duct 28.

In the fluidized bed apparatus 1 as described above, when the fluidizing air is supplied from the air supply duct 28 into the air supply chamber 27, the air passes through the perforated plate 26 and flows into the raw-material storage chamber 25. With this, particulate materials in the raw-material storage chamber 25 are blown up and enter a fluidized state in the raw-material storage chamber 25 and the fluidizing chamber 23. In this state, the binder liquid and the coating liquid are appropriately sprayed from the spray nozzle 21. With this, a granulation process and a coating process are performed on the particulate materials. In this case, minute solid particles are removed by the cartridge filters 15 from the air which causes the particulate materials to enter into the fluidized state. As a result, the air is purified. After that, the air having passed through the cartridge filters 15 is discharged to an outside of the apparatus through the air exhaust duct.

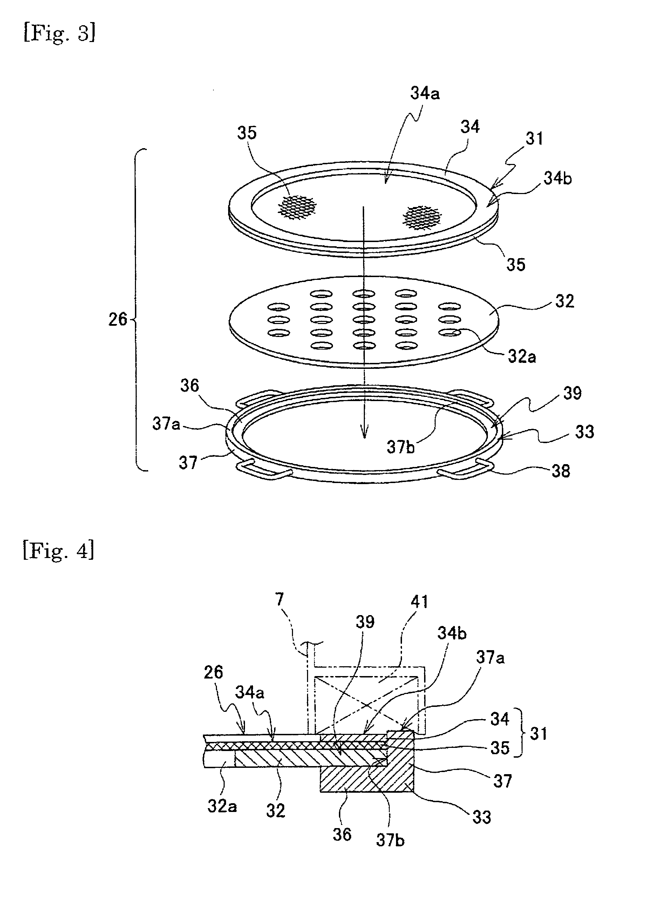

In this context, in conventional fluidized bed apparatuses, as described above, the perforated plate has a quadruple screw-attachment structure as illustrated in FIG. 8. In addition, an outer periphery of the perforated plate is incorporated in the apparatus in a state of being exposed to the outside. Thus, there have been problems in terms of workability and sealing properties. Therefore, in the fluidized bed apparatus 1 of the present invention, in order to solve such problems, the perforated plate has a screw-free structure (screwless structure), and a sealing side wall is provided to a lower flange. With this, workability and sealing properties are improved. FIG. 3 is an explanatory diagram of an attachment structure of the perforated plate 26 in the fluidized bed apparatus 1. FIG. 4 is an explanatory diagram of a cross-sectional configuration of an attachment portion of the perforated plate 26. As illustrated in FIG. 3, the perforated plate 26 includes a flanged upper perforated disk (first perforated disk) 31, a lower perforated disk (second perforated disk) 32, and a support flange 33.

The flanged upper perforated disk 31 (hereinafter, shortened as upper perforated disk 31) includes an annular stainless flange member 34 and a fine-meshed wire net (net-like member) 35 attached to the flange member 34. The flange member 34 is fixed by soldering to an upper surface of an outer peripheral portion of the wire net 35 formed in a disk-like shape. The wire net 35 is arranged so as to face a central void portion 34a of the flange member 34. The lower perforated disk 32 is a disk-like member similar to the lower perforated disk 53 of FIG. 8, and is formed of a porous metal plate provided with a large number of vents 32a. An outer diameter of the lower perforated disk 32 is substantially the same as an outer diameter of the upper perforated disk 31. Meanwhile, as illustrated in FIG. 4, the support flange 33 has an L-shape in cross-section, and includes an annular ring portion 36 and a sealing side wall (side-wall portion) 37 formed on an outer periphery of the ring portion 36. Handles 38 are attached to an outer periphery side of the sealing side wall 37. Note that, in addition to the net-like member, the wire net 35 includes a perforated disk provided with a large number of radially-small vents.

The sealing side wall 37 is provided upward over the entire periphery of the ring portion 36. A perforated disk housing portion 39 is formed on an inner side of the sealing side wall 37. An inner diameter of the perforated disk housing portion 39 is set to be somewhat larger than the outer diameters of the upper perforated disk 31 and the lower perforated disk 32. Further, the height of the perforated disk housing portion 39 is set to be larger than a thickness obtained by superimposition of the upper perforated disk 31 and the lower perforated disk 32. Accordingly, in the perforated plate 26, the upper perforated disk 31 and the lower perforated disk 32 are fit-inserted (inserted in a fitting manner) into the perforated disk housing portion 39. With this, the upper perforated disk 31 and the lower perforated disk 32 are housed, without use of screws, in the perforated disk housing portion 39 in a state of being regulated in movement in the horizontal direction. In addition, in this case, outer peripheral portions of the upper perforated disk 31 and the lower perforated disk 32 are not exposed to the outside of the apparatus, but covered with an inner wall 37b of the sealing side wall 37.

To such perforated plate 26, the raw-material-vessel container 7 of the processing vessel 2 is attached through intermediation of a sealing material (sealing member) 41 made of rubber. As illustrated in FIG. 4, in the perforated disk housing portion 39, the lower perforated disk 32 and the upper perforated disk 31 are stacked on each other, and the raw-material-vessel container 7 is connected thereto from above together with the sealing material 41. In this case, an upper end portion 37a of the sealing side wall 37 is held in close contact with the sealing material 41 in a biting manner. Further, an upper surface 34b of the flange member 34, that is, an upper surface of the upper perforated disk 31 is held in close contact with the sealing material 41, and an upper side of the perforated plate 26 is covered with the sealing material 41. Accordingly, the outer peripheral portions of the upper perforated disk 31 and the lower perforated disk 32 are closed by the sealing side wall 37, and an upper side of the outer peripheral portions is also sealed by the sealing material 41. With this, the perforated plate 26 is housed and held in an air-tight state in the perforated disk housing portion 39. Further, the upper perforated disk 31 and the lower perforated disk 32 in the perforated disk housing portion 39 are regulated by the sealing material 41 in movement in the upper-and-lower direction.

As described above, in the fluidized bed apparatus 1 of the present invention, the perforated plate 26 can be toollessly assembled/disassembled without use of screws. Accordingly, the perforated plate 26 can be easily assembled, and hence work man-hours can be reduced. Further, outer peripheries of the upper perforated disk 31 and the lower perforated disk 32 are covered with the seating side wall 37, and hence are not exposed to the outside of the apparatus. Thus, it is possible to prevent suction of outside air from side surfaces of the perforated disks, stabilize processing conditions of the particulate materials, and suppress variation in product quality. Still further, a decrease in the number of components leads to less frequent handling of heavy components, and hence work environment is improved. In addition, screws are not used for assembly of the perforated plate 26, and hence problems can be avoided such as foreign-matter entry caused by drop of screws.

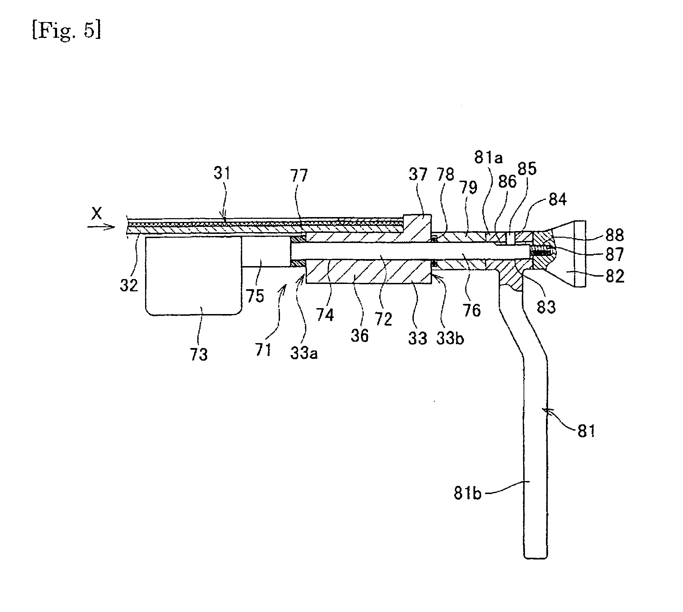

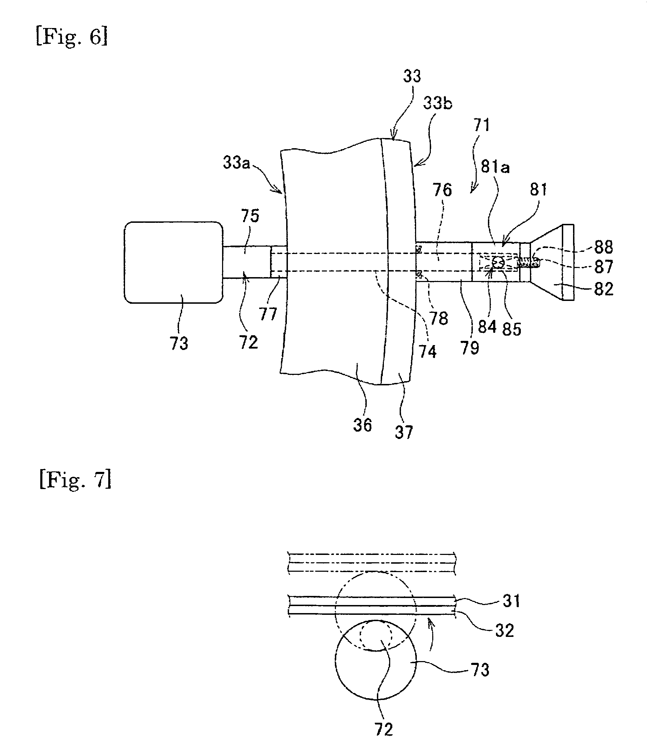

Meanwhile, in the fluidized bed apparatus 1, although the perforated plate 26 can be toollessly assembled, the upper perforated disk 31 and the lower perforated disk 32 are housed in the perforated disk housing portion 39. Thus, it is somewhat difficult to disassemble the perforated plate 26 from an upper surface side. That is, it is impossible to apply fingers to the upper perforated disk 31 and the lower perforated disk 32 in the perforated disk housing portion 39, and hence it is difficult to take out the upper perforated disk 31 and the lower perforated disk 32 from an inside of the perforated disk housing portion 39. As a countermeasure, the support flange 33 is provided with a perforated-plate ejection mechanism for lifting up the upper perforated disk 31 and the lower perforated disk 32 from the support flange 33 so that the perforated plate 26 can be easily disassembled. FIG. 5 is a cross-sectional view of a structure of a perforated-plate ejection mechanism 71 as just described above, and FIG. 6 is a plan view thereof. Further, FIG. 7 is an explanatory diagram illustrating operation of the perforated-plate ejection mechanism 71, in which the perforated-plate ejection mechanism 71 is viewed from the X direction of FIG. 5. Note that, FIG. 6 illustrates a state in which the upper perforated disk 31 and the lower perforated disk 32 are omitted from the support flange 33.

As illustrated in FIGS. 5 to 7, the perforated-plate ejection mechanism 71 is provided to the support flange 33. The perforated-plate ejection mechanism 71 includes a manipulation rod (shaft member) 72. To a distal end portion on a device-inner side of the manipulation rod 72, there is attached a lever cam (cam member) 73. To the support flange 33, there is provided a rod-insertion hole 74 in a manner of passing through the ring portion 36 in a radial direction, and the manipulation rod 72 is inserted into the rod-insertion hole 74. The manipulation rod 72 includes a large diameter portion 75 arranged on the device-inner side and a small diameter portion 76 arranged on a device-outer side. To a distal end of the large diameter portion 75, the lever cam 73 having a columnar shape is fixed in an eccentric state with respect to the large diameter portion 75. A fluororesin washer 77 is interposed between the large diameter portion 75 and an inner peripheral portion 33a of the support flange 33.

The manipulation rod 72 is attached from the device-inner side into the rod-insertion hole 74. As illustrated in FIG. 5, when the manipulation rod 72 is attached into the rod-insertion hole 74, the small diameter portion 76 thereof projects from an outer peripheral portion 33b of the support flange 33 to the outside of the apparatus. Through intermediation of a fluororesin O-ring 78, a cylindrical stainless collar 79 is fitted from outside to the small diameter portion 76. The O-ring 78 is held in close contact with the small diameter portion 76 and the outer peripheral portion 33b. The rod-insertion hole 74 is sealed by the O-ring 78, and hence the air-tight state is maintained in the apparatus. Further, the small diameter portion 76 includes a stainless handle 81 attached thereto, and is fixed by a detachable knob 82.

The handle 81 includes a boss portion 81a and a handgrip portion 81b. The boss portion 81a is provided with a shaft hole 83 and a pin hole 84 which is formed along the radial direction. A detent pin 85 is fixed in the pin hole 84. Meanwhile, the small diameter portion 76 of the manipulation rod 72 is provided with a flat surface portion 86 correspondingly to the pin hole 84. As illustrated in FIG. 5, when the flat surface portion 86 and the detent pin 85 are engaged with each other, the handle 81 enters a state of being rotation-locked by the manipulation rod 72. Further, a male-screw portion 87 is provided to a distal end of the small diameter portion 76. As a counterpart, a female-screw portion 88 is provided to the detachable knob 82. When the female-screw portion 88 is threadedly engaged with the male-screw portion 87, the detachable knob 82 is fixed to the manipulation rod 72. As a result, the manipulation rod 72 is regulated in movement in the axial direction.

When the perforated-plate ejection mechanism 71 is assembled to the support flange 33, first, the washer 77 is inserted onto the small diameter portion 76 of the manipulation rod 72, and then moved in a large-diameter-portion-75 direction. After that, from an inner-peripheral-portion-33a side of the support flange 33, the manipulation rod 72 is attached to the rod-insertion hole 74. With this, from the outer peripheral portion 33b of the support flange 33, the small diameter portion 76 projects to the outside of the apparatus. Next, the O-ring 78 is attached to the projecting small diameter portion 76, and after that, the collar 79 is mounted thereto. After the collar is mounted, the handle 81 is attached from the axial direction. When the handle 81 is attached to the manipulation rod 72, the shaft hole 83 is fitted to the small diameter portion 76 so that a distal end portion of the detent pin 85 comes to a position of the flat surface portion 86. With this, the handle 81 is mounted in the state of being rotation-locked by the manipulation rod 72. Then, fastening of the detachable knob 82 into the male-screw portion 87 causes the manipulation rod 72 to be retained, with the result that the perforated-plate ejection mechanism 71 is assembled. Note that, when the perforated-plate ejection mechanism 71 is disassembled, the steps are performed in reverse order.

In the perforated-plate ejection mechanism 71 as described above, when the handle 81 is rotated with the handgrip portion 81b being held, the manipulation rod 72 is rotated. In accordance with rotation of the manipulation rod 72, the lever cam 73 is rotationally moved from a setting position illustrated by solid lines of FIG. 7 to an ejection position illustrated by two-dot chain lines. When the lever cam 73 is rotationally moved to the ejection position, the upper perforated disk 31 and the lower perforated disk 32 are pushed up into a state illustrated by the two-dot chain lines. With this, the upper perforated disk 31 and the lower perforated disk 32 are lifted up to a position higher than the sealing side wall 37 of the support flange 33, and are partially disengaged from the perforated disk housing portion 39 (lift-up portions). By holding the lift-up portions, a worker can easily eject the upper perforated disk 31 and the lower perforated disk 32 from the support flange 33. Accordingly, the perforated plate 26 can be easily disassembled, and hence work man-hours can be reduced. Further, as described above, assembly/disassembly of the perforated-plate ejection mechanism 71 is easy, and hence work load at the time of washing or the like is small.

The present invention is not limited to the above-mentioned embodiment. As a matter of course, various modifications may be made thereto without departing from the spirit of the present invention.
For example, although the above-mentioned embodiment describes the fluidized bed apparatus for performing a coating process on particulate materials, the present invention is also applicable to an apparatus for granulation and an apparatus for drying particulate materials. Further, the perforated-plate ejection mechanism 71 may be provided with a mechanism for the lever cam 73 to automatically return to the setting position when the handle 81 is released. Without such return mechanism, when the upper perforated disk 31 and the lower perforated disk 32 are lifted up by rotation of the handle 81, there is a risk that the upper perforated disk 31 and the lower perforated disk 32 are balanced in a state of being floated by the lever cam 73, which may stop the manipulation rod 72. In this case, when some external force acts on the perforated disks, for example, by a worker holding down the upper perforated disk 31 and the lower perforated disk 32 from above, there is a risk that the upper perforated disk 31 and the lower perforated disk 32 dent into the lever cam 73, which may cause deformation of the perforated disks. As a countermeasure, in order that the lever cam 73 automatically returns to the setting position when the handle 81 is released, for example, a weight may be attached to a distal end of the handle 81, or a return spring may be attached to the manipulation rod 72.

## Claims

1. A fluidized bed apparatus (1) comprising a processing vessel (2) formed in a cylindrical shape and an air-permeable perforated plate (26) attached to the processing vessel, for communicating an inside and an outside of the processing vessel to each other, wherein the perforated plate comprises:
a first perforated disk (31) comprising an annular flange member (34), and a net-like member (35) arranged so as to face a central void portion of the flange member;
a disk-like air-permeable second perforated disk (32) having vents (32a); and
a support flange (33),
wherein the processing vessel (2) is connected to the perforated plate through intermediation of a sealing member (41) held in close contact with an upper end of the side-wall portion (37),
**characterized in that**
the support flange (33) comprises an annular ring portion (36) and a side-wall portion (37) provided upward over an outer periphery of the ring portion, and a perforated disk housing portion (39) which is capable of housing the first perforated disk and the second perforated disk is formed on the inner side of the side-wall portion (37), and
the support flange (33) comprises a perforated-plate ejection mechanism (71) for lifting up the first perforated disk (31) and the second perforated disk (32) which are arranged in the perforated disk housing portion (39).

2. A fluidized bed apparatus according to claim 1, wherein the first perforated disk (31) and the second perforated disk (32) are fit-inserted into the perforated disk housing portion (39), and wherein the side-wall portion (37) faces an entire of an outer peripheral portion of each of the first perforated disk (31) and the second perforated disk (32) while covering the outer peripheral portion of each of the first perforated disk and the second perforated disk.

3. A fluidized bed apparatus according to claim 1, wherein the sealing member is held in close contact with an upper surface of the first perforated disk of the perforated plate housed in the perforated disk housing portion.

4. A fluidized bed apparatus according to claim 1, wherein the perforated-plate ejection mechanism comprises:
a shaft member attached to the side-wall portion and capable of being rotationally manipulated from an outside of the fluidized bed apparatus; and
a can member attached to the shaft member and held in contact with one of the first perforated disk and the second perforated disk, the cam member being rotationally moved in accordance with rotation of the shaft member so that the first perforated disk and the second perforated disk are lifted up.

## Patentansprüche

1. Wirbelschichtvorrichtung (1) mit einem mit einer zylindrischen Form ausgebildeten Bearbeitungsbehälter (2) und einer an dem Bearbeitungsbehälter angebrachten luftdurchlässigen perforierten Ringplatte (26) zum miteinander in Verbindung bringen einer Innenseite und einer Außenseite des Bearbeitungsbehälters, wobei die perforierte Platte aufweist:
eine erste perforierte Scheibe (31) mit einem Ringflanschelement (34) und einem netzähnlichen Element (35), das so angeordnet ist, dass es einem zentralen leeren Abschnitt des Flanschelements zugewandt ist;
eine scheibenartige luftdurchlässige zweite perforierte Scheibe (32), die Auslässe (32a) aufweist; und
einen Stützflansch (33),
wobei der Bearbeitungsbehälter (2) mittels eines Dichtelements (41), das in engem Kontakt mit einem oberen Ende des Seitenwandabschnitts (37) gehalten wird, mit der perforierten Ringplatte verbunden ist,
**dadurch gekennzeichnet, dass**
der Stützflansch (33) einen ringförmigen Ringabschnitt (36) und einen Seitenwandabschnitt (37), der aufwärts über einem äußeren Rand des Ringabschnitts bereitgestellt ist, aufweist, und ein Gehäuseabschnitt für perforierte Scheiben (39), der imstande ist, die erste perforierte Scheibe und die zweite perforierte Scheibe aufzunehmen, auf der Innenseite des Seitenwandabschnitts (37) ausgebildet ist, und
der Stützflansch (33) einen Auswurfmechanismus für perforierte Platten (71) aufweist, und zwar zum Anheben der ersten perforierten Scheibe (31) und der zweiten perforierten Scheibe (32), die in dem Gehäuseabschnitt für perforierte Scheiben (39) angeordnet sind.

2. Wirbelschichtvorrichtung nach Anspruch 1, bei der die erste perforierte Scheibe (31) und die zweite perforierte Scheibe (32) über einen Presssitz in dem Gehäuseabschnitt für perforierte Scheiben (39) eingesetzt sind, und wobei der Seitenwandabschnitt (37) dem gesamten äußeren Randabschnitt von jeweils der ersten perforierten Scheibe (31) und der zweiten perforierten Scheibe (32) zugewandt ist, bei gleichzeitigem Abdecken des äußeren Randabschnitts von sowohl der ersten perforierten Scheibe als auch der zweiten perforierten Scheibe.

3. Wirbelschichtvorrichtung nach Anspruch 1, bei der das Dichtelement in engem Kontakt mit einer oberen Fläche der ersten perforierten Scheibe der perforierten Platte gehalten wird, die in dem Gehäuseabschnitt für perforierte Scheiben aufgenommen ist.

4. Wirbelschichtvorrichtung nach Anspruch 1, bei welcher der Auswurfmechanismus für die perforierten Platten aufweist:
ein Schaftelement, das an dem Seitenwandabschnitt angebracht ist, und imstande ist, von einer Außenseite der Wirbelstromvorrichtung in Rotationsrichtung bewegt zu werden; und
ein Becherelement, das an dem Schaftelement angebracht ist, und mit der ersten perforierten Scheibe oder der zweiten perforierten Scheibe in Kontakt gehalten wird, wobei das Becherelement entsprechend einer Rotation des Schaftelements so in Rotationsrichtung bewegt wird, dass die erste perforierte Scheibe und die zweite perforierte Scheibe angehoben werden.

## Revendications

1. Appareil à lit fluidisé (1) comprenant un récipient de traitement (2) formé en une forme cylindrique et une plaque perforée (26) perméable à l'air attachée au récipient de traitement, pour faire communiquer un intérieur et un extérieur du récipient de traitement l'un avec l'autre, dans lequel la plaque perforée comprend :
un premier disque perforé (31) comprenant un élément formant bride annulaire (34), et un élément réticulaire (35) agencé de façon à faire face à une partie vide centrale de l'élément formant bride ;
un second disque perforé (32) perméable à l'air semblable à un disque ayant des évents (32a) ; et
une bride de support (33),
dans lequel le récipient de traitement (2) est relié à la plaque perforée par l'intermédiaire d'un élément d'étanchéité (41) maintenu en contact étroit avec une extrémité supérieure de la partie de paroi latérale (37),
**caractérisé en ce que**
la bride de support (33) comprend une partie formant bague annulaire (36) et une partie de paroi latérale (37) disposée vers le haut sur une périphérie extérieure de la partie formant bague, et une partie de logement de disque perforé (39), qui est susceptible de loger le premier disque perforé et le second disque perforé, est formée sur le côté intérieur de la partie de paroi latérale (37), et
la bride de support (33) comprend un mécanisme d'éjection de plaque perforée (71) pour soulever le premier disque perforé (31) et le second disque perforé (32) qui sont agencés dans la partie de logement de disque perforé (39).

2. Appareil à lit fluidisé selon la revendication 1, dans lequel le premier disque perforé (31) et le second disque perforé (32) sont insérés de façon ajustée dans la partie de logement de disque perforé (39), et dans lequel la partie de paroi latérale (37) fait face à la totalité d'une partie périphérique extérieure de chacun du premier disque perforé (31) et du second disque perforé (32) tout en couvrant la partie périphérique extérieure de chacun du premier disque perforé et du second disque perforé.

3. Appareil à lit fluidisé selon la revendication 1, dans lequel l'élément d'étanchéité est maintenu en contact étroit avec une surface supérieure du premier disque perforé de la plaque perforée logée dans la partie de logement de disque perforé.

4. Appareil à lit fluidisé selon la revendication 1, dans lequel le mécanisme d'éjection de plaque perforée comprend :
un élément formant arbre attaché à la partie de paroi latérale et susceptible d'être manipulé en rotation à partir d'un extérieur de l'appareil à lit fluidisé ; et
un élément formant came attaché à l'élément formant arbre et maintenu en contact avec un du premier disque perforé et du second disque perforé, l'élément formant came étant déplacé en rotation selon la rotation de l'élément formant arbre de sorte que le premier disque perforé et le second disque perforé sont soulevés.
